Europäisches Patentamt

European Patent Office

Office européen des brevets

(11) Veröffentlichungsnummer: **0 234 285 B1**

# EUROPÄISCHE PATENTSCHRIFT

(45) Veröffentlichungstag der Patentschrift:
24.07.91 Patentblatt 91/30

(51) Int. Cl.$^5$: **A01G 1/00**, A01G 25/06

(21) Anmeldenummer: 87100876.9

(22) Anmeldetag: 22.01.87

(54) Rollrasen, Matte sowie Verfahren zum Aufziehen von Rollrasen.

(30) Priorität: 24.01.86 DE 3602060

(43) Veröffentlichungstag der Anmeldung:
02.09.87 Patentblatt 87/36

(45) Bekanntmachung des Hinweises auf die
Patenterteilung:
24.07.91 Patentblatt 91/30

(84) Benannte Vertragsstaaten:
AT BE CH DE ES FR GB GR IT LI LU NL SE

(56) Entgegenhaltungen:
EP-A- 0 035 953
CH-A- 603 029
DE-A- 2 321 362
DE-A- 2 438 301
FR-A- 2 451 699
US-A- 4 065 926

(73) Patentinhaber: Brehm International Marketing
+ Lizenzgesellschaft mbH
Postfach 1203
W-8100 Garmisch-Partenkirchen (DE)

(72) Erfinder: Herzog, Rudolf
Melkendorf 49
W-8650 Kulmbach (DE)
Erfinder: Brehm, geb. Ehrmuth, Heide
Thomas-Knorr-Strasse 26
W-8100 Garmisch-Partenkirchen (DE)

(74) Vertreter: Graf, Walter, Dipl.-Ing.
Sckellstrasse 1
W-8000 München 80 (DE)

## Beschreibung

Die Erfindung betrifft einen sogenannten Roll- oder Fertig-rasen. Er wird bisher meist auf einem sorgfältig vorberei-teten Mutterboden gezogen und anschliessend dann mit Spe- zialmaschinen als Bänder oder Rasenstücke vom Boden abge-schält. Um ein Reissen des Rollrasens beim Abschälen, Transport und Verlegen an der zu begrünenden Stelle zu vermeiden ist es auch bekannt, für das Aufziehen des Roll-rasens eine gewebte oder gewirkte Matte zu verwenden, die in den Rasen mit einwächst. Es ist ferner bekannt, das Aufziehen eines solchen Rollrasens mit oder ohne Verstär-kungsmatte auf einer Kunststoffolie als Trennschicht durch-zuführen, um so das spätere Abheben der fertigen Rasen-stücke zu erleichtern. Allen bekannten Rollrasen und Ver-fahren zu deren Aufzucht ist gemeinsam, auch bei Verwendung von zusätzlichen Verstärkungsmatten oder dgl. immer als Nährboden für den Grassamen eine zusätzliche Nährboden-schicht aus Torfmull, Humus oder Mutterboden zu benutzen. Diese meist einige Zentimeter dicke feuchte Humusschicht, in welche die Graspflanzen beim Aufziehen einwachsen, machen den bekannten Rollrasen sehr schwer und unhandlich, er kann daher nur in relativ kleinen Stücken von beispiels-weise 30 x 80 cm transportiert werden, ein solches aufge-rolltes kleines Rasenstück besitzt dann immer noch-ein Gewicht von etwa 20 kg.

Zum Anlegen von Rasenflächen ist es bekannt, hierfür spezielle Matten mit eingelagerten Grassamen vorzusehen, die auf den zu begrünenden Mutterboden aufgelegt werden, so daß der keimende Samen in den Mutterboden einwachsen kann, wobei das Mattenmaterial mit der Zeit verrottet. Eine Matte dieser bekannten Art besteht beispielsweise aus zwei nicht gewebten Lagen aus Leinenfasern mit dazwischen eingelagerten Grassamen (EP-A-0 035 953), eine andere aus Steinwolle mit einer auf der Rückseite angebrachten gelochten Kunststoffolie aus verrottbarem Material (DE-OS 24 38 301). Es ist auch schon eine Erosionsschutzmatte bekannt, die aus einer lockeren dicken Wirrfaserschicht für die Ablagerung von Feststoffen und aus einem auf der Unterseite angebrachten dichten dünneren verrottungsfesten Faservlies besteht und auf die zusammen mit Erdreich Grassamen aufstreubar ist (De-OS 2 321 362).

Es ist Aufgabe der Erfindung, einen Rollrasen zu schaffen, der sehr geringes Gewicht besitzt, damit auch in relativ grossen Stücken, beispielsweise relativ breiten und langen Bahnen hergestellt und trotzdem leicht transportiert werden kann. Es ist ferner Aufgabe der Erfindung, eine hiefür besonders geeignete Matte sowie ein einfaches Energie und Arbeit sparendes Verfahren zum Aufziehen eines solchen Rasens aufzuzeigen.

Gemäss der Erfindung wird zum Aufziehen des Rollrasens keine Humusschicht mehr benutzt sondern ausschliesslich eine nur einige Millimeter dicke Matte aus Naturfaservlies, die auf der Rückseite eine gelochte Folie aus verrottbarem Kunststoffmaterial aufweist. Diese Faservliesmatte wird zum Ankeimen und Aufziehen der Graspflanzen nur mit einer geeigneten Nährstofflösung bewässert, so dass die Graskeime ohne Humusschicht in diese Faservliesmatte einwachsen und nur durch die dort gespeicherte Nährflüssigkeit ernährt werden. Die Wurzeln wachsen allmählich durch die Löcher der auf der Mattenrückseite angebrachten Folie hindurch. Damit kann nach kürzester Zeit nur auf der Faservliesmatte ein dichter Graswuchs erzeugt werden. Da hierzu keine zusätzliche Humusschicht benutzt wird, ist der so entstehende Rollrasen von sehr geringem Flächengewicht, er kann in grossen langen Bahnen erzeugt und zu Rollen aufgewickelt werden, die trotzdem sehr leicht sind und daher einfach und kostengünstig transportiert werden können. Auch das Verlegen solcher leichter Rollrasenbahnen ist wegen des geringen Flächengewichts sehr vereinfacht. Als Naturfasermaterial für die Faservliesmatte sind die verschiedenartigsten Naturprodukte geeignet, beispielsweise Jute, Filz, entsprechend verarbeitete Holzwolle oder Zellstoff. Die Struktur und Dichte dieser Faservliesmatte ist so gewählt, dass der auf ihrer Oberfläche auszusäende Grassamen nicht beschädigt wird sondern im Gegenteil in die Oberfläche gut eingebettet wird. Gleichzeitig muss diese Faservliesschicht ein gutes Saugvermögen für die Nährflüssigkeit besitzen und die Keimwurzeln der Graspflanzen müssen leicht in den Vliesstoff einwachsen und durch diesen hindurch zur Rück-seite durchwachsen können. Die zusätzliche rückseitige ge-lochte Kunststoffolie stellt sicher, dass die in die darüberliegende Faservliesschicht eingebrachte Nährflüssigkeit dort gespeichert bleibt und nicht schnell nach unten wieder abläuft. Durch entsprechende Wahl der Grösse und Verteilung der Löcher in der Kunststoffolie kann dies entsprechend ge-steuert und beeinflusst werden. Durch die Löcher können trotzdem die Wurzeln der keimenden Gras-pflanzen ungehindert zur Rückseite hindurchwach-sen und sich auf der Rückseite der Matte in entsprechender Länge und Dichte entwickeln. Gleichzeitig dient die in der Matte eingearbeitete gelochte Kunststoffolie auch noch zur Stabilisierung der Faservlies-matte und sie verhindert auch, dass nach dem Auslegen des Rollrasens an der zu begrünenden Stelle aus dem dortigen Mutterboden Unkraut nach oben durchwächst. Diese Kunststoff-folie verrottet zusammen mit den Naturfasern des Faser-vlieses erst nach einiger Zeit nach dem Auslegen des Rollrasens und nach dem endgültigen Verwachsen der Rasenpflanzen mit dem Mutterboden.

Ein erfindungsgemässer Rollrasen kann sehr rationell und ohne grosse Investitionen und Spezialmaschinen hergestellt werden und in relativ grossen Stücken und Bahnen transportiert werden, er kann sogar von Laien sehr einfach verlegt werden. Die Herstellung von breiten und langen Bahnen machen ihn auch besonders gut geeignet für das Begrünen von Böschungen zur Absicherung gegen Erosionen.

Gemäss einer Weiterbildung der Erfindung hat es sich als besonders vorteilhaft erwiesen, einen solchen Rollrasen auf einer speziellen Bewässerungsunterlage aufzuziehen, die es ermöglicht, die erforderliche Nährlösung von unten in die Faservliesschicht kontinuierlich einzubringen. Damit ist gewährleistet, dass die Faservliesschicht ständig feucht gehalten wird und immer genügend Nährstofflösung (in Wasser gelöste spezielle Düngemittel) der Faservliesschicht zugeführt werden. Diese Bewässerung und Nährstoffzufuhr von unten verhindert auch ein zu rasches Verdunsten auf der Mattenoberseite. Durch geeignete Messfühler kann dieser kontinuierliche Nährstofflösungs-Zufluss bei Benutzung einer erfindungsgemässen Bewässerungsunterlage auch sehr einfach automatisiert werden.

Die erfindungsgemässe Matte zum Aufziehen der Graspflanzen und gegebenenfalls auch die zugehörige Bewässerungsunter-lage ist nicht nur zum Aufziehen von Graspflanzen geeignet sondern gegebenenfalls auch zum Aufziehen von Gemüse wie Salat oder anderen Kleinpflanzen. Die erfindungsgemässe Matte eignet sich auch zum Pflanzenanbau ohne Humusschicht im häuslichen Bereich, beispielsweise zum Ziehen vom Küchenkräutern, Kleingemüse, Blumen usw. auf dem Balkon, der Fensterbank oder der Terrasse. Hierzu wird einfach ein entsprechend zugeschnittenes Mattenstück in einen entsprechenden flachen Schalenbehälter eingelegt, mit entsprechender Nährlösung getränkt und dann der entsprechende Pflanzensamen zugegeben. Das Keimen, Anwachsen und Weiterwachsen in der Faservliesschicht erfolgt dann genauso wie nachfolgend bezüglich der Graspflanzenaufzucht bei einem Rollrasen näher beschrieben wird.

Die Erfindung wird im folgenden anhand schematischer Zeichnungen an Ausführungsbeispielen näher erläutert.

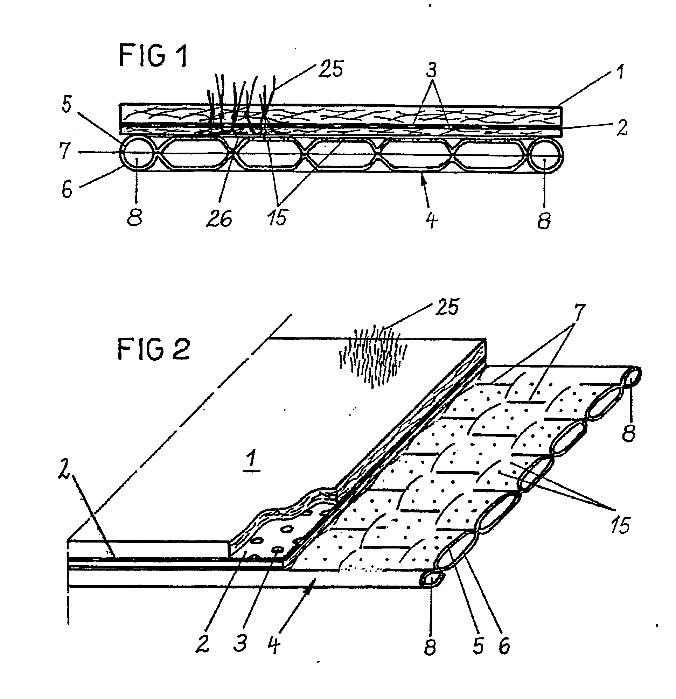

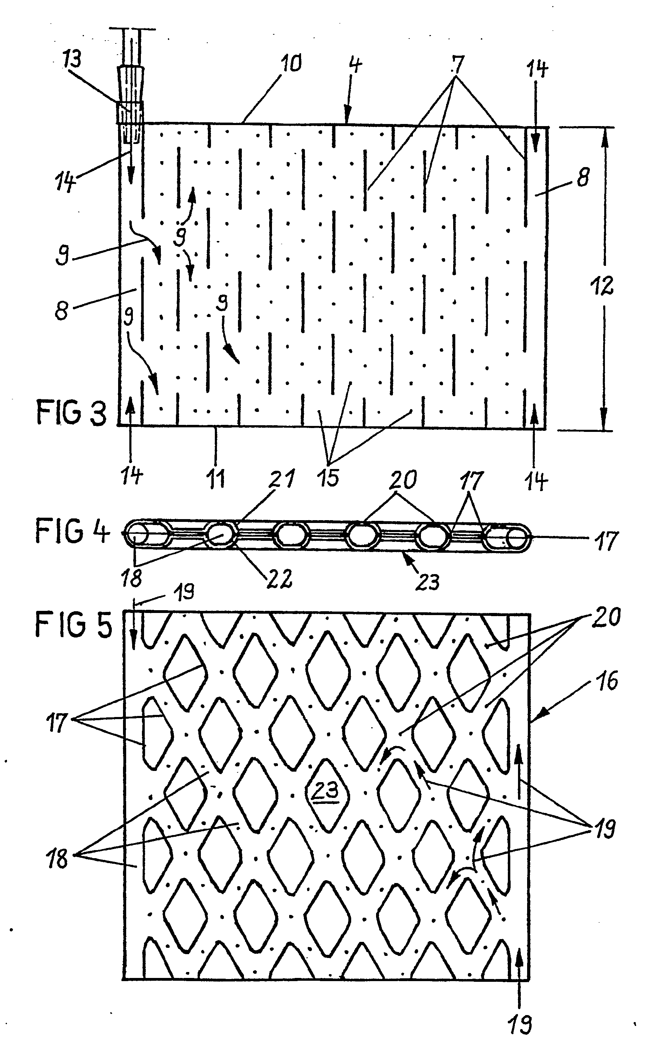

Figuren 1 und 2 zeigen im Querschnitt und in perspektivischer Ansicht einen Teil eines erfindungsgemässen Rollrasens, der nur aus einer Matte 1 aus gepressten verrottbaren Natur-fasern besteht, in dessen unterem Drittel seiner Dicke eine mit Löchern 3 versehene Folie 2 aus verrottbarem Kunststoff-material eingearbeitet ist. Die Graspflanzen 25 sind ohne Humusschicht unmittelbar in diese lockere Faservliesstruktur der Matte 1 eingewachsen, ihre Wurzeln 26 sind durch die Löcher 3 der Folie 2 hindurch bis zur Rückseite gewachsen und haben sich dort längs der undurchdringbaren Oberseite der Bewässerungs-Unterlage 4 in Querrichtung netzartig ver-zweigt. Das Aufziehen dieses Rollrasens kann in bekannter Weise auf einer ausgelegten Kunststoffolie als Unterlage er-folgen, vorzugsweise wird hierzu jedoch die erwähnte Bewäs-serungsunterlage 4 benutzt. Diese Unterlage besteht aus zwei Kunststoffolien 5 und 6, die über Schweissnähte 7 nach einem vorbestimmten-Muster miteinander verbunden sind. Durch die Schweissnähte 7 werden seitliche Kanäle 8 gebildet und da-zwischen wird die gesamte Folienfläche in einzelne mitein-ander in Verbindung stehende Kammern aufgeteilt. Die obere Kunststoffolie 5 ist mit einer über die gesamte Fläche ver-teilten Löchern 15 versehen. Die so vorbereitete verschweiss-te und mit Löchern versehene Unterlage wird vorzugsweise in Bahnen hergestellt, von dieser Bahn werden dann in in der gewünschten Grösse entsprechende Stücke 12 abgeschnitten und die Schnittränder 10 und 11 anschliessend verschweisst. An einer oder mehreren Stellen 14 der seitlichen Kanäle 8 wird ein handelsübliches Schlauchelement 13 angebracht. Über den Zuführschlauch kann so Nährflüssigkeit in den Kanal 8 eingeführt werden, die sich dann längs der Pfeile 9 über den durch die Schweissnähte 7 in Kammern unterteilte Innen-raum verteilt. Durch das Einführen der Flüssigkeit unter Druck werden die Folienwände kissenartig angehoben und die unter Druck zugeführte Flüssigkeit tritt schliesslich über die Löcher 15 auf der Oberseite der Unterlage aus und ge-langt schliesslich zur Unterseite der aufgelegten Matte 1. Damit kann die Matte 1 von unten gleichmässig bewässert und mit der Nährflüssigkeit getränkt werden. Die Anbaumatte 1 ist entweder nur lose auf die Unterlage 4 aufgelegt, vor-zugsweise sind die Matte 1 und die Unterlage 4 zumindest längs der Aussenränder miteinander verbunden, um so das seitliche Entweichen von Nährflüssigkeit zu verhindern. Bei unmittelbarer Verbindung von Matte 1 und Unterlage 4 könnte gegebenenfalls die Folienzwischenschicht 2 in der Matte 1 weggelassen werden.

Bei dem Ausführungsbeispiel der Unterlage 23 nach den Figu-ren 4 und 5 sind die Schweissnähte 17 rautenförmig diagonal angeordnet, so dass diagonal verlaufende kanäle 18 entstehen, durch welche die von aussen zugeführte mit Düngemittel angereicherte Nährflüssigkeit in Richtung der Pfeile 19 zu den Austrittsöffnungen 20 in der Oberfolie 21 gelangt.

Zum Aufziehen eines Rollrasens ohne Humusschicht ausschließ-lich unter Verwendung einer Naturfaservlies-Matte 1 wird der Grassamen auf der Oberfläche der Matte 1 ausgesät. Gleichzeitig wird die Matte mit einer geeigneten Nährflüs-sigkeit getränkt, vorzugsweise von unten über die Bewässe-rungsunterlage 4. Das Ankeimen des Samens erfolgt vorzugs-weise in Gewächshäusern, damit durch Sturm oder Regen der Samen nicht von der Oberseite der Matte 1 weggeblasen wird. Je nach Grassorte entwickeln sich dann innerhalb von nur zehn bis vierzehn Tagen bei ständiger Nährflüssigkeits-zufuhr in der Matte 1 die Graspflanzen, ihre Wurzeln wachsen in die Matte 1 ein, durchdringen die Löcher 3 der Folie 2 und wachsen schliesslich auf der Rückseite der Matte 1 seitlich verzweigt zu einem Netz zusammen. Einzelne Wurzeln können dabei durch die Löcher 15, 20 der Unterlage in das Innere der Unterlage 4 einwachsen und damit unmittelbar Nährflüssigkeit aus dem Inneren der Unterlage aufnehmen. Auf der Oberseite der Matte 1 bildet sich schliesslich ein dichter Teppich von grünen Gräsern. Anschliessend kann die Matte vorzugsweise zusammen mit der Unterlage ins Freie verbracht werden, so dass der Rasen weitere vierzehn Tage auswachsen kann. Anschliessend kann dann die Matte 1 mit den eingewachsenen Gräsern von der Unterlage 4 abgenommen werden, wobei gegebenenfalls in die Löcher 15, 20 eingewachsene Wurzeln herausgezogen oder abgerissen werden. Der so in vorbestimmten Stücken oder längeren Bahnen gebildete Rollrasen wird dann einfach eingerollt und zum zu begrünen-den Standort transportiert. Die Länge und Breite der so herstellbaren Rollrasenstücke richtet sich nach den jeweili-gen Verwendungszwecken, die Unterlage wird in ihren Abmes-sungen entsprechend gewählt oder durch einzelne austausch-bare Unterlagenstücke in der gewünschten Grösse zusammen-gesetzt. Die extrem kurze Ankeimzeit wird durch die Ver-wendung des verrottbaren Naturfaservlieses der Matte in Kom-bination mit der eingearbeiteten Folie 2 erreicht, da durch diese Kombination die Matte immer mit genügender Nährflüs-sigkeit feucht erhalten bleibt.

Die Faservliesmatte 1 aus Filz oder Jute besitzt eine Dicke von beispielsweise nur 5 bis 10 mm, sie ist mit der geloch-ten Kunststoffolie durch Nadeln mittels Nadelwalzen, Ver-kleben oder Verschweissen verbunden. Die Herstellung der Matte 1 mit eingelegter Folie kann beispielsweise so erfol-gen, dass zunächst auf einer Faservliesmatte von etwa 5 mm Dicke eine dünne Folie aus verrottbarem Material aufge-bracht wird und schliesslich darüber dann eine zusätzliche weitere dünne Faservliesschicht von nur 2 bis 3 mm aufge-tragen wird. Anschliessend wird dann der so gebildete Verbundstoff durch Nadeln entsprechend verfestigt und dadurch gleichzeitig die Löcher der Folie ausgebildet. Da bei der Matte 1 ausschliesslich verrottbares Material benutzt wird, das beispielsweise bereits nach einigen Monaten beim ausgelegten Rasen und dessen Verwachsen mit dem Mutterboden an dem zu begrünenden Standort verrottet, ist die erfin-dungsgemässe Matte sehr umweltschonend. Die Matte kann auch von ungeübten Personen mit einer Schere in gewünschte Stücke zerschnitten werden und kann daher auch sehr einfach ver-legt werden.

Das Auskeimen des Rasens in der Matte 1 kann in an sich bekannter Weise auch auf einer üblichen wurzelundurchläs-sigen Unterlage erfolgen, obwohl die dargestellte Bewäs-serungsunterlage 4 für den systematischen Grossanbau von Rollrasen vorteilhafter ist, da hiermit die Dosierung der Nährflüssigkeitszufuhr am einfachsten geregelt und ge-steuert werden kann.

## Patentansprüche

1. Rollrasen mit einer Faservlies-Matte (1) aus verrott-baren Naturfasern, dadurch, **gekennzeich-net**, daß auf der Rückseite oder im unteren Drittel der Dicke der Faservlies-Matte (1) eine gelochte Folie (2) aus verrottbarem Kunststoffmaterial angeordnet ist, wobei in der Faservlies-Matte (1) ohne zusätzliche Nährbodenschicht Graspflanzen (25) mit ihren Wurzeln (26) durch die Löcher (3) der Folie (2) hindurch zur Rückseite eingewachsen sind.

2. Matte zum Aufziehen von Rollrasen nach Anspruch 1 mit einer Faservlies-Matte (1) aus verrott-baren Naturfasern und einer gelochten Folie (2) aus verrottbaren Kunststoffmaterial, dadurch gekennzeichnet, daß die gelochte Folie (2) im unteren Drittel der Dicke der Faservlies-Matte(1) eingearbeitet ist.

3. Verfahren zum Aufziehen von Rollrasen nach Anspruch 1, dadurch **gekennzeichnet**, daß eine Faservlies-Matte (1) aus verrottbaren Naturfasern mit einer auf ihrer Rückseite oder im unteren Drittel ihrer Dicke angeordneten gelochten Folie (2) aus ver-rottbarem Kunststoffmaterial auf einer wasserundurch-lässigen Unterlage (4) ausgelegt und ihre Oberfläche mit Grassamen belegt wird, der Grassamen dann durch Bewässern mit Nährlösung zum Keimen gebracht und nach der Ausbildung von Keimwurzeln auf der Mattenunterseite diese zusammen mit dem Graswuchs von der Unterlage abgenommen wird.

4. Verfahren zum Aufziehen von Rollrasen nach Anspruch 3, dadurch **gekennzeichnet**, daß der Grassamen durch Zufuhr von Nährlösung durch Wasseraus-trittsöffnungen in der Oberseite der Unterlage von der Mattenunterseite zur oberen Faservlies-Matte be-wässert wird, wobei die Nährlösung bis zum Auswachsen von Keimwurzeln auf der Unterseite der Matte über Bewässerungskanäle in der Unterlage zugeführt wird.

5. Verfahren zum Aufziehen von Rollrasen nach Anspruch 3 oder 4, dadurch **gekennzeichnet**, daß die Unterlage (4,23) aus einer unteren Kunststoffolie (6,22) und einer mit Löchern (15,22) versehenen oberen Kunststoffolie (5,21) besteht und die Bewässerungskanäle (8,18) durch Verschweißen dieser Folien längs vorbestimmter Schweißnähte (7,17) ausgebildet sind.

## Claims

1. Turf on the roll with a felt mat (1) made of biodegradable natural fibres, characterised by the fact that on the under side or in the bottom third of the thickness of the felt mat (1) there is a perforated film (2) made of biodegradable synthetic material, so that in the felt mat (1), without an additional nutrient layer, grass plants (25) with their roots (26) are grown through the holes (3) of the film (2) to the underside.

2. Mat for growing turf on the roll as per claim 1 - with a felt mat (1) made of biodegradable natural fibres and a perforated film (2) of biodegradable synthetic material, characterised by the fact that the perforated film (2) is incorporated in the bottom third of the thickness of the felt mat (1).

3. Process for growing turf on the roll as per claim 1, characterised by the fact that a felt mat (1) made of biodegradable natural fibres, together with a perforated film (2) mounted on its underside or in the bottom third of its thickness and made of biodegradable synthetic material, is laid out on an impermeable underlay (4) and its surface is covered with grass seed, whereafter the grass seed is induced to germinate by being watered with a nutrient solution and after the formation of seed roots on the underside of the mat these are lifted from the underlay together - with the growth of grass.

4. Process for growing turf orn the roll as per claim 3, characterised by the fact that the grass seed is watered from the underside of the top fibrous felt mat by supplying nutrient solution through irrigation apertures in the top of the underlay, whereby the nutrient solution is supplied through irrigation channels in the underlay until the seed roots grow through to the underside of the mat.

5. Process for growing turf on the roll as per claim 3 or 4, characterised by the fact that the underlay (4, 23) comprises a lower synthetic film (6, 22) and an upper synthetic film (5, 21) with holes (15, 22) in and the irrigation channels (8, 18) are formed along predetermined weld seams (7, 17) when these films are welded together.

## Revendications

1. Rouleau de gazon avec un tapis (1) en toison de fibres, en fibres naturelles décomposables, caractérisé en ce que, sur le côté caché ou bien dans le tiers inférieur de l'épaisseur du tapis (1) en toison de fibres est aménagé une feuille (2) perforée en matériau synthétique décomposable, et en ce que dans le tapis (1) en toison de fibres, des graminées (25) avec leurs racines (26) ont poussé à travers les perforations (3) de la feuille (2) jusqu'au côté caché, sans couche supplémentaire de sol nutritif.

2. Tapis de culture de rouleaux de gazon selon la revendication 1 avec un tapis (1) en toison de fibres en fibres naturelles décomposables et une feuille (2) perforée, en matériau synthétique décomposable, caractérisée en ce que la feuille (2) perforée est insérée dans le tiers inférieur de l'épaisseur du tapis (1) en toison de fibres.

3. Procédé de culture de rouleaux de gazon selon la revendication 1, caractérisé en ce qu'un tapis en toison de fibres, en fibres naturelles décomposables, avec une feuille (2) perforée en matériau synthétique décomposable, placée sur le côté caché du tapis, ou bien dans le tiers inférieur de son épaisseur, est disposée sur une sous-couche (4) imperméable à l'eau et en ce que sa surface supérieure est recouverte avec du semis de gazon, en ce que le semis de gazon est ensuite amené à la germination grâce à une irrigation avec une solution nutritive, et en ce qu'après la formation des racines germinatives sur le côté inférieur du tapis, ce dernier est retiré de la sous-couche en même temps que la végétation de gazon.

4. Procédé de culture de rouleaux de gazon selon la revendication 3, caractérisé en ce que le semis de gazon est irrigué au moyen d'une alimentation en solution nutritive, à travers les orifices d'évacuation d'eau du côté supérieur de la sous-couche depuis le côté inférieur du tapis jusqu'à la partie supérieure du tapis en toison de fibres ; dans ce tapis, la solution nutritive est amenée, jusqu'à la poussée externe des racines germinatives, sur le côté inférieur du tapis, au moyen de canaux d'irrigation situés au sein de la sous-couche.

5. Procédé de culture de rouleaux de gazon selon l'une quelconque des revendications 3 ou 4, caractérisé en ce que la sous-couche (4, 23) est constituée d'une feuille (6, 22) en matériau synthétique située à la partie inférieure et d'une feuille en matériau synthétique (5, 21) prévue avec des perforations (15, 22) située à la partie supérieure et en ce que les canaux d'irrigations (8, 18) sont formés par soudure de ces feuilles le long de cordons de soudure (7, 17) pré-définis.

FIG 1

25    3    1

5

2

7

6

8    26    15    4    8

FIG 2

25    7

1

8

2

2    3    4    8    5    6

15

FIG 3

FIG 4

FIG 5